# EUROPÄISCHE PATENTSCHRIFT

(11) **EP 3 850 684 B1**
(45) Veröffentlichungstag und Bekanntmachung des Hinweises auf die Patenterteilung: **22.05.2024**
(21) Anmeldenummer: 19742669.5
(22) Anmeldetag: 10.07.2019
(51) Int. Cl.: H01M 50/24, H01M 50/213, H01M 50/256

(54) **DICHTUNGSANORDNUNG ZUR ABDICHTUNG EINES RAHMENTEILS**
SEAL ARRANGEMENT FOR SEALING A FRAME PART
DISPOSITIF D'ÉTANCHÉITÉ POUR L'ÉTANCHÉIFICATION D'UNE PARTIE DE CADRE

(30) Priorität: 10.09.2018 AT 507662018
(43) Veröffentlichungstag der Anmeldung: 21.07.2021
(73) Patentinhaber: John Deere Electric Powertrain LLC, Moline, IL 61265 (US)
(72) Erfinder: KREISEL, Philipp, 4240 Freistadt (AT); WALDSCHÜTZ, Gerhard, 4240 Freistadt (AT); DOBUSCH, Peter, 4264 Grünbach (AT)
(74) Vertreter: Hübscher & Partner Patentanwälte GmbH
(86) Internationale Anmeldenummer: PCT/AT2019/060228
(87) Internationale Veröffentlichungsnummer: WO 2020/051604

(56) Entgegenhaltungen:
- WO-A2-2010/120906
- DE-A1-102016 124 705
- JP-A- 2004 220 869
- JP-A- 2017 107 758
- US-A1- 2014 283 360

## Beschreibung

### Technisches Gebiet

Die Erfindung bezieht sich auf eine Dichtungsanordnung zur Abdichtung eines Rahmenteils gegenüber einer in eine Aufnahme des Rahmenteils eingesetzten Batteriezelle, mit einem gegen den Rahmenteil abgestützten Dichtelement.

### Stand der Technik

Aus dem Stand der Technik (zum Beispiel DE 10 2016 124705 A1) sind Träger für zu einem Modul zusammengesetzte Batteriezellen mit Rahmenteilen und Dichtungsanordnungen bekannt, wobei zur Abdichtung eines Rahmenteils gegenüber einer in eine Aufnahme des Rahmenteils eingesetzten Batteriezelle gegen den Rahmenteil abgestützte Dichtelemente vorgesehen sind. Dabei bilden die aus einem thermoplastischen Elastomer gefertigten Dichtelemente ringförmige Durchtrittsdichtungen, die jeweils in eine innerhalb der Zellenaufnahmen umlaufende Aufnahmenut eingesetzt sind. Da die Batteriezellen je nach Fertigungstoleranzen sowie insbesondere zylindrische Batteriezellen aufgrund deren Aufbau je nach elektrischem Betriebszustand einer permanenten Schwankung der Zellengeometrie und somit der Zellenquerschnittsform unterliegen, bringen die aus dem Stand der Technik bekannten Dichtungsanordnungen den erheblichen Nachteil mit sich, dass derartige Schwankungen der Zellengeometrie durch die Dichtelemente nicht ausgeglichen werden können und folglich die Gefahr eines Dichtungsbruchs besteht. Darüber hinaus werden die Dichtelemente konstruktionsbedingt zufolge einer solchen Zellenatmung schädlichen Lastspielen unterworfen, die letztendlich zu einer raschen Materialermüdung und damit ebenfalls zu einem Verlust der erforderlichen Dichtwirkung führen.

### Darstellung der Erfindung

Der Erfindung liegt somit die Aufgabe zugrunde, eine Dichtungsanordnung der eingangs geschilderten Art so auszugestalten, dass unabhängig von den Fertigungstoleranzen sowie dem elektrischen Betriebszustand der Zellen eine zuverlässige Dichtwirkung erzielt wird.

Die erfinderische Dichtungsanordnung gemäß Anspruch 1 löst die gestellte Aufgabe dadurch, dass das Dichtelement einen Zentrierwulst, in dessen Bereich das Dichtelement an einer Abstützfläche des Rahmenteils anliegt, und eine über den Zentrierwulst in die Aufnahme frei vorstehende Dichtlippe umfasst.

Zufolge dieser Merkmale übernimmt der Zentrierwulst in erster Linie eine Positionierfunktion, für die aufgrund der unmittelbaren Abstützung des Zentrierwulstes an einer Abstützfläche des Rahmenteils eine hohe Flächenpressung erreicht wird. Die eigentliche Abdichtung erfolgt durch die Dichtlippe, die sich mit ausreichender Vorspannung an die durch den Zentrierwulst ausgerichtete Batteriezelle anlegt. Veränderungen der Geometrie der Batteriezelle werden dabei in erster Linie von dem Zentrierwulst ausgeglichen, wobei die dadurch auf den Zentrierwulst wirkenden Kräfte von diesem aufgenommen und über die Abstützfläche in den Rahmenteil eingeleitet werden. Die an der Batteriezelle anliegende Dichtlippe muss daher keine unmittelbaren Kraftflüsse abtragen, sodass eine schädliche Materialermüdung der Dichtlippe vermieden wird, weil diese frei über den Zentrierwulst in die Aufnahme vorsteht, das heißt im Gegensatz zum Zentrierwulst keine Positionierkräfte in den Rahmenteil einleitet. Dies kann entweder dadurch begünstigt werden, dass der Rahmenteil im Bereich der Dichtlippe gegenüber dem Bereich des Zentrierwulstes unter Ausbildung einer Stufe oder Aussparung zurückversetzt ist oder indem sich der Rahmenteil überhaupt nur bis zum Bereich des Zentrierwulstes erstreckt. Eine freie Beweglichkeit der Dichtlippe wird zudem begünstigt, indem sich zwischen dem Zentrierwulst und der Dichtlippe eine Materialaussparung bildet. Die vorteilhafte Dichtwirkung wird dadurch auch verstärkt, weil sich aufgrund der Materialaussparung eine dem Kontaktbereich zwischen Dichtlippe und Batteriezelle vorgelagerte Pufferzone für zwischen Zentrierwulst und Batteriezelle hindurchtretende Fluide im Sinne einer Spaltdichtung bildet.

Insbesondere bei der Assemblierung von Batteriemodulen mit zylindrischen Batteriezellen muss darauf geachtet werden, dass beim Fügevorgang die Dichtelemente durch die Batteriezellen nicht beschädigt werden.

Um vor diesem Hintergrund einen raschen und bezogen auf die Dichtelemente beschädigungsfreien Fügevorgang der Batteriezellen zu erzielen, wird vorgeschlagen, dass der Zentrierwulst eine Anlaufschräge zum beschädigungsfreien Einsetzen der Batteriezelle aufweist. Zufolge dieser Maßnahmen wird beim Fügevorgang die auf die Anlaufschräge des Zentrierwulstes treffende Umlaufkante des Zellbodens entsprechend geführt, sodass selbst bei voneinander leicht divergierenden Längsachsen der Fügerichtung, der Batteriezelle sowie der Aufnahme ein gleichmäßiges Fügen ermöglicht wird, ohne dass die Gefahr besteht, die in die Aufnahme vorstehenden Teile der Dichtelemente zu beschädigen oder gar abzureißen.

Die Erfindung bezieht sich auch auf einen Träger für zu einem Modul zusammengesetzte Batteriezellen mit einer erfindungsgemäßen Dichtungsanordnung, wobei der Träger je zwei bezüglich einer Fügeachse gegenüberliegende Aufnahmen aufweist, deren Randbereich je einen Rahmenteil zur Abstützung eines Dichtelementes bildet. Dabei kann insbesondere der Randbereich der Rahmenteile eine die Abstützfläche für den Zentrierwulst bildende Aufnahmestufe umfassen, wohingegen bei benachbarten Zellen die Zellenaufnahmen selbst Aufnahmestege für die Dichtelemente bilden, sodass der Querschnitt des Dichtelementes im Bereich von zwei benachbarten Zellen jeweils ein V-förmiges Dichtlippenprofil ergibt. Besonders günstige Fertigungsbedingungen ergeben sich, wenn der die erfindungsgemäße Dichtungsanordnung aufweisende Träger im Mehrkomponenten-Spritzguss gefertigt wird. Dabei stellt der Träger die Hartkomponente, beispielsweise auf Basis von formbeständigen Thermoplasten wie Polyoxymethylen, und das Dichtelement die Weichkomponente, beispielsweise auf Basis von thermoplastischen Elastomeren, dar. Grundsätzlich können als Dichtelement aber sämtliche Materialien eingesetzt werden, die bezogen auf Shore-Härte, E-Modul und / oder Zugfestigkeit ähnliche Eigenschaften aufweisen wie thermoplastische Elastomere.

Besonders günstige und insbesondere dichtungsschonende Fügebedingungen ergeben sich, wenn bei jeweils beiden der bezüglich einer Fügeachse gegenüberliegenden Dichtelemente in Fügerichtung der Zentrierwulst vor und die Dichtlippe nachgelagert ist. Dies bedeutet, dass die gegenüberliegenden Dichtelemente bezüglich der Normalebene des Fügerichtungsvektors nicht symmetrisch bzw. gespiegelt angeordnet sind, sondern übereinstimmend ausgerichtet, also in Fügerichtung voneinander beabstandet mit gleicher Ausrichtung hintereinander angeordnet sind. Dadurch wird sichergestellt, dass eine Batteriezelle beim Fügen einerseits immer zuerst auf den Zentrierwulst bzw. je nach Ausführungsform auf dessen Anlaufschräge trifft und somit bereits vorpositioniert wird und dass andererseits die frei vorstehenden Dichtlippe somit bereits in Fügerichtung ausgerichtet ist, sodass diese beschädigungsfrei von der eingeführten Batteriezelle zurückgedrängt werden kann.

### Kurze Beschreibung der Erfindung

In der Zeichnung ist der Erfindungsgegenstand beispielsweise dargestellt. Es zeigen
- Fig. 1: einen Detailschnitt durch eine erfindungsgemäße Dichtungsanordnung,
- Fig. 2: einen der Fig. 1 entsprechenden Schnitt bei eingesetzter Batteriezelle,
- Fig. 3: einen Träger mit einer erfindungsgemäßen Dichtungsanordnung in einer ersten Ausführungsform in einem schematischen Querschnitt in kleinerem Maßstab und
- Fig. 4: einen der Fig. 3 entsprechenden Querschnitt eines Trägers in einer zweiten Ausführungsform.

### Wege zur Ausführung der Erfindung

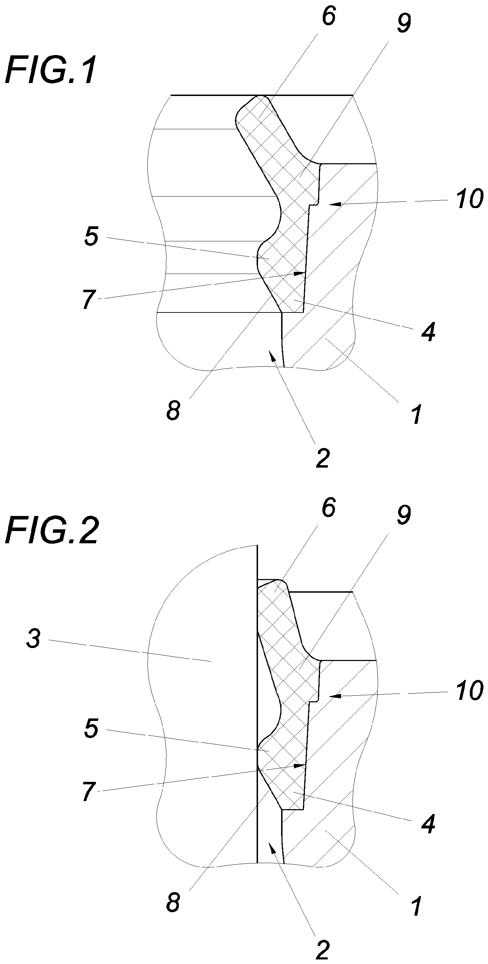

Eine erfindungsgemäße Dichtungsanordnung zur Abdichtung eines Rahmenteils 1 gegenüber einer in eine Aufnahme 2 des Rahmenteils 1 eingesetzten Batteriezelle 3 umfasst ein Dichtelement 4, das einen Zentrierwulst 5 und eine Dichtlippe 6 aufweist. Das Dichtelement 4 liegt dabei im Bereich des Zentrierwulstes 5 an einer Abstützfläche 7 des Rahmenteils 1 an, sodass in den Zentrierwulst 5 eingeleitete Positionierkräfte unmittelbar in den Rahmenteil 1 abgeleitet werden können. Die Dichtlippe 6 steht über den Zentrierwulst 5 frei in die Aufnahme 2 vor, solange keine Batteriezelle 3 in die Aufnahme 2 eingesetzt ist, wie dies in der Fig. 1 dargestellt wird.

Nach dem Einsetzen einer Batteriezelle 3 in die Aufnahme 2 wird die Dichtlippe 6 von der Batteriezelle 3 zurückgedrängt, wie dies in der Fig. 2 gezeigt ist.

In einer besonders vorteilhaften Ausführungsform weist der Zentrierwulst 5 eine Anlaufschräge 8 für die Batteriezelle 3 auf, um eine Beschädigung des Zentrierwulstes 5 und damit des Dichtelements 4 beim Einsetzen der Batteriezelle 3 in die Aufnahme 2 zu vermeiden.

Um eine freie Beweglichkeit der Dichtlippe 6 sicherzustellen, kann der Rahmenteil 1 im Bereich der Dichtlippenbasis 9 unter Ausbildung einer Stufe 10 zurückversetzt sein, wobei die Stufe 10 eine vorteilhafte Positionierung des Dichtelementes 4 auf dem Rahmenteil 1 ermöglicht. Der Rahmenteil 1 kann in weiterer Folge im Bereich des Dichtlippenkopfes unter Ausbildung eines Freiraums zwischen der Dichtlippe 6 und dem Rahmenteil 1 noch weiter zurückversetzt sein oder generell bündig mit der Dichtlippenbasis 9 abschließen, wie dies den Fig. 1 und 2 entnommen werden kann.

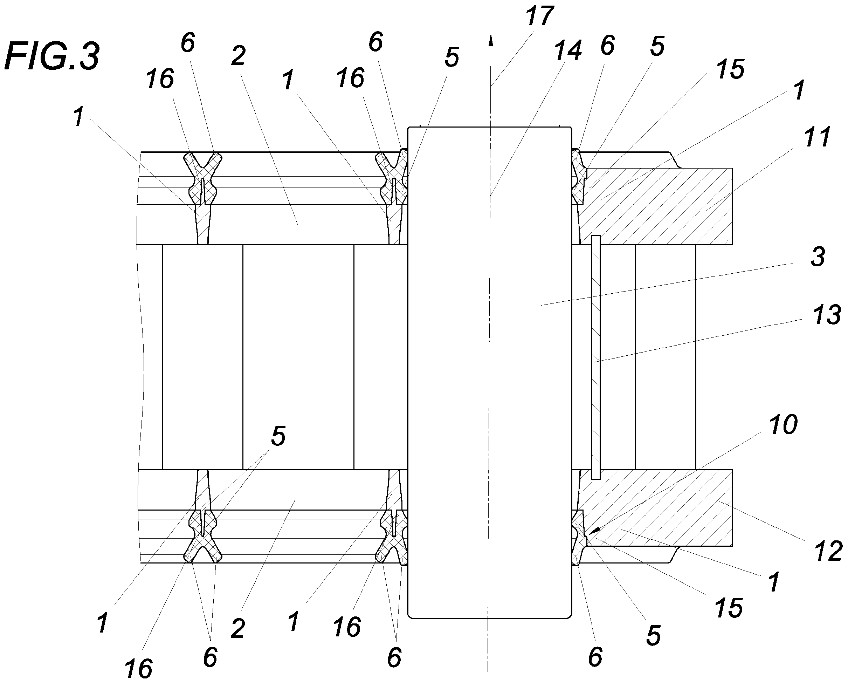

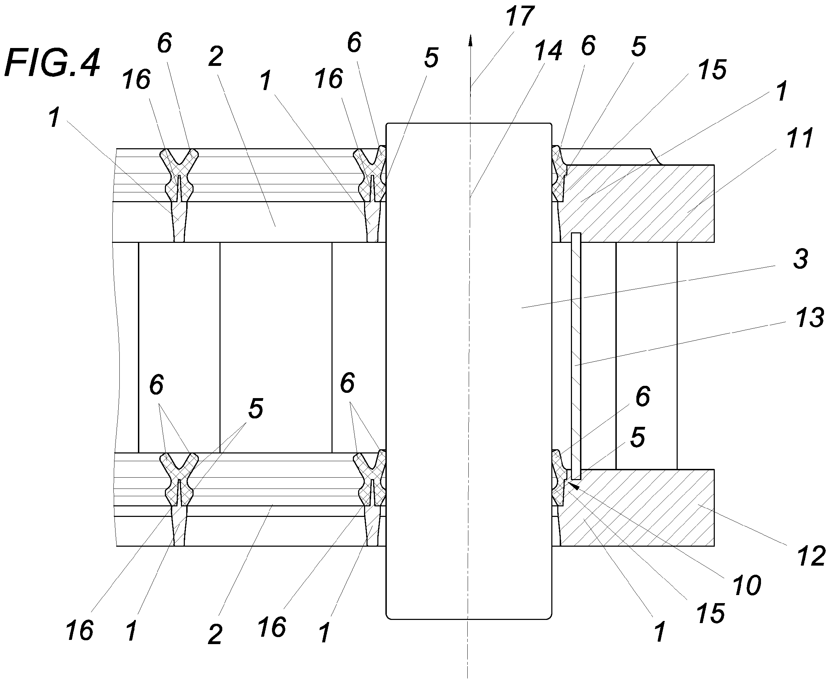

In den Fig. 3 und 4 sind zwei Ausführungsformen eines Trägers für zu einem Modul zusammengesetzte Batteriezellen 3 mit einer erfindungsgemäßen Dichtungsanordnung dargestellt. Der Träger umfasst dabei zwei Rahmen 11, 12, die über Stützstege 13 miteinander verbunden sind und zwischen sich einen abzudichtenden Strömungskanal für ein Temperierfluid bilden. Die beiden Rahmen 11, 12 weisen bezüglich je einer Fügeachse 14 gegenüberliegende Aufnahmen 2 auf, deren Randbereiche je einen Rahmenteil 1 zur Abstützung eines Dichtelementes 4 bilden. Die Rahmenteile 1 können dabei wahlweise eine Aufnahmestufe 15 oder Aufnahmestege 16 für die Dichtelemente 4 bilden. Aufnahmestufen 15 werden dabei in Randbereichen des Trägers vorgesehen, während Aufnahmestege 16 zur Abstützung aneinanderliegender Dichtelemente 4 vorteilhaft eingesetzt werden können. Da die aneinanderliegenden Dichtelemente 4 einstückig ausgeführt werden können bilden deren Zentrierwülste 5 eine auf die Aufnahmestege 16 aufsetzbare Basis, von der die Dichtlippen 6 V-förmig in die angrenzenden Aufnahmen 2 frei vorstehen.

In der Fig. 3 sind die Dichtelemente 4 bezüglich der Fügerichtung 17 gegensinnig ausgerichtet, sodass im Bereich des Rahmens 12 die Dichtlippen 6 in Fügerichtung 17 den Zentrierwülsten 5 vorgelagert sind, während im Bereich des Rahmens 11 die Zentrierwülste 5 in Fügerichtung 17 den Dichtlippen 6 vorangehen.

In der bevorzugten Ausführungsform der Fig. 4 sind sämtliche Dichtelemente 4 bezüglich 4 bezüglich der Fügerichtung 17 gleichsinnig dergestalt ausgerichtet, als dass die Zentrierwülste 5 stets den Dichtlippen 6 in Fügerichtung 17 vorgelagert sind, wodurch ein einfaches Einfügen der Batteriezellen 3 in den Träger ohne der Gefahr einer Beschädigung der Dichtelemente 4 erfolgen kann.

## Patentansprüche

1. Dichtungsanordnung zur Abdichtung eines Rahmenteils (1) gegenüber einer in eine Aufnahme (2) des Rahmenteils (1) eingesetzten Batteriezelle (3), mit einem gegen den Rahmenteil (1) abgestützten Dichtelement (4), **dadurch gekennzeichnet, dass** das Dichtelement (4) einen Zentrierwulst (5), in dessen Bereich das Dichtelement (4) an einer Abstützfläche (7) des Rahmenteils (1) anliegt, und eine über den Zentrierwulst (5) in die Aufnahme (2) frei vorstehende Dichtlippe (6) umfasst.

2. Dichtungsanordnung nach Anspruch 1, **dadurch gekennzeichnet, dass** der Zentrierwulst (5) eine Anlaufschräge (8) zum beschädigungsfreien Einsetzen der Batteriezelle (3) aufweist.

3. Träger für zu einem Modul zusammengesetzte Batteriezellen (3) mit einer Dichtungsanordnung nach einem der vorangegangenen Ansprüche, **dadurch gekennzeichnet, dass** der Träger je zwei bezüglich einer Fügeachse (14) gegenüberliegende Aufnahmen (2) aufweist, deren Randbereich je einen Rahmenteil (1) zur Abstützung eines Dichtelementes (4) bildet.

4. Träger nach Anspruch 3, **dadurch gekennzeichnet, dass** bei jeweils beiden der bezüglich einer Fügeachse (14) gegenüberliegenden Dichtelemente (4) in Fügerichtung (17) der Zentrierwulst (5) vor und die Dichtlippe (6) nachgelagert ist.

## Claims

1. Sealing arrangement for sealing a frame part (1) with respect to a battery cell (3) inserted into a receptacle (2) of the frame part (1), the sealing arrangement having a sealing element (4) supported against the frame part (1), **characterized in that** the sealing element (4) comprises a centering bead (5), in the region of which the sealing element (4) bears against a supporting surface (7) of the frame part (1), and a sealing lip (6) projecting freely beyond the centering bead (5) into the receptacle (2).

2. Sealing arrangement according to claim 1, **characterized in that** the centering bead (5) has a bevel (8) for damage-free insertion of the battery cell (3).

3. Carrier for battery cells (3) assembled to form a module, having a sealing arrangement according to one of the preceding claims, **characterized in that** the carrier has in each case two receptacles (2) which are opposite one another with respect to a joining axis (14) and wherein the respective edge regions of these receptacles (2) each form a frame part (1) for supporting a sealing element (4).

4. Carrier according to claim 3, **characterized in that** the centering bead (5) is positioned upstream and the sealing lip (6) is positioned downstream in the joining direction (17) of both of the sealing elements (4) opposite each other with respect to a joining axis (14).

## Revendications

1. Dispositif d'étanchéité pour assurer l'étanchéité d'une partie de cadre (1) par rapport à une cellule de batterie (3) insérée à l'intérieur d'un logement (2) de la partie de cadre (1), comprenant un élément d'étanchéité (4) appuyé contre la partie de cadre (1), **caractérisé en ce que** l'élément d'étanchéité (4) comprend un renflement de centrage (5) dans la région duquel l'élément d'étanchéité (4) est appuyé contre une surface d'appui (7) de la partie de cadre (1), et une lèvre d'étanchéité (6) qui fait saillie librement à l'intérieur du logement (2) à partir du renflement de centrage (5).

2. Dispositif d'étanchéité selon la revendication 1, **caractérisé en ce que** le renflement de centrage (5) présente une pente d'approche (8) pour insérer la cellule de batterie (3) sans endommager celle-ci.

3. Support pour cellules de batterie assemblées en un module (3), comprenant un dispositif d'étanchéité selon l'une quelconque des revendications précédentes, **caractérisé en ce que** le support présente respectivement deux logements (2) opposés par rapport à un axe d'assemblage (14), dont la région de bord forme respectivement une partie de cadre (1) pour le support d'un élément d'étanchéité (4).

4. Support selon la revendication 3, **caractérisé en ce que**, pour chacun des deux éléments d'étanchéité (4) opposés par rapport à un axe d'assemblage (14), le renflement de centrage (5) est placé en amont et la lèvre d'étanchéité (6) est placée en aval dans la direction d'assemblage (17).
